# EUROPÄISCHE PATENTSCHRIFT

(11) **EP 2 163 491 B1**
(45) Veröffentlichungstag und Bekanntmachung des Hinweises auf die Patenterteilung: **20.03.2013**
(21) Anmeldenummer: 09169940.5
(22) Anmeldetag: 10.09.2009
(51) Int. Cl.: B65G 1/04, B65G 1/08

(54) **Lagerautomat**
Warehouse robot
Automate de stockage

(30) Priorität: 11.09.2008 DE 202008012069 U
(43) Veröffentlichungstag der Anmeldung: 17.03.2010
(73) Patentinhaber: Gebr. Willach GmbH, 53809 Ruppichteroth (DE)
(72) Erfinder: Willach, Jens, 53783, Eitorf (DE); Schmitt, Werner, 53809, Ruppichteroth (DE); Campe, Tobias, 53840, Troisdorf (DE)
(74) Vertreter: von Kreisler Selting Werner

(56) Entgegenhaltungen:
- EP-A1- 1 631 521
- EP-A1- 1 902 976
- EP-A2- 1 347 423
- WO-A1-90/00507
- US-A- 5 380 139

## Beschreibung

Die Erfindung betrifft einen Lagerautomaten gemäß dem Oberbegriff des Anspruchs 1.

Es ist bekannt, Lagerautomaten, die die Einlagerung und Auslagerung von Waren vollautomatisch vornehmen, mit einem Manipulator zu versehen, der die einzelnen Lagerplätze anfahren kann und Waren an diese Lagerplätze übergibt oder aus diesen entnimmt. Besonders geeignet für Schnelldreher sind Schrägfachbodenregale, bei denen die einzelnen Waren in Kanälen, die durch seitliche Begrenzungen getrennt sind, auf einer Schrägfläche enthalten sind. Bei Entnahme eines unteren Gegenstandes rutschen die übrigen Gegenstände nach. In der Regel sind in jedem Kanal gleichartige Gegenstände enthalten. Die Gegenstände sind generell in quaderförmigen Packungen untergebracht, wobei Packungen gleichen Formats in einen Kanal eingebracht werden, dessen Kanalbreite auf die Packungsgröße abgestimmt ist. In Schrägfachbodenregalen können aber auch Waren unterschiedlicher Formen, z.B. Zylinder, und unterschiedlichen Formats, innerhalb desselben Kanals gespeichert werden.

Der Manipulator eines Lagerautomaten transportiert die Waren bei deren Einlagerung von einer Eingabestation an einen ausgewählten Lagerplatz. Der Manipulator hat ferner die Aufgabe, Waren von einem Lagerplatz zu entnehmen und an eine Ausgabevorrichtung zu verbringen. Der Manipulator wird von dem Lagerverwaltungsrechner gesteuert. Üblicherweise geschieht das Vorschieben einer auf der Tragfläche des Manipulators angeordneten Ware durch eine Kolbenzylindereinheit. Diese wird betätigt, um den Gegenstand von der Tragfläche in das Lagerregal zu schieben.

EP 1 902 976 A1 offenbart einen Lagerautomaten gemäβ dem berbegriff des anspruchs 1.

EP 1 631 521 A1 offenbart einen Lagerautomaten, bei dem ein Manipulator über mehrere an Teleskoparmen angeordnete Schieber einen Gegenstand in entgegengesetzte Richtungen bewegen kann.

Der Erfindung liegt die Aufgabe zugrunde, einen konstruktiv einfachen Lagerautomaten mit einer erweiterten Fähigkeit des Manipulators zu schaffen, damit dieser nicht nur ein frontseitiges Regal bedienen kann, sondern auch ein rückseitiges Regal.

Der erfindungsgemäße Lagerautomat ist durch den Anspruch 1 definiert. Er weist an dem Manipulator einen Schieber auf, der zum Bewegen eines auf der Tragfläche liegenden Gegenstandes in entgegengesetzten Richtungen derart antreibbar ist, dass der Schieber wahlweise an einem ersten Ende des Gegenstandes oder an einem entgegengesetzten zweiten Ende angreifen kann. Somit kann der Schieber einen Gegenstand entweder in Vorwärtsrichtung oder in Rückwärtsrichtung antreiben. Unter "vorne" ist in diesem Zusammenhang die Richtung zu dem einen Regal zu verstehen und unter "hinten" die Richtung zu dem anderen Regal. Der Manipulator vermag Gegenstände in ein vorderes oder hinteres Regal einzuschieben oder sie dort zu entnehmen. Ein einziger Manipulator kann auf diese Weise zwei einander gegenüber angeordnete Regale bedienen.

Gemäß einer bevorzugten Ausführungsform ist der Schieber an einem endlosen Riemen angebracht. Der Schieber kann mit dem endlosen Riemen einen kompletten Umlauf vollziehen, so dass er wahlweise an dem einen Ende des Gegenstandes oder an dem anderen Ede angreifen kann. Die Regale sind Schrägfachbodenregale. Die Tragfläche des Manipulators ist eine Schrägfläche, so dass Gegenstände aus dem vorderen Regal auf die schräge Tragfläche des Manipulators herabgleiten können. Ferner können Gegenstände von der schrägen Tragfläche auf das hintere Regal überführt werden. In beiden Fällen kann der über der Tragfläche bewegbare Schieber mitwirken. In einem Fall als Schieber zum Hochschieben des Gegenstandes oder als Stütze zum langsamen Absenken eines von der Schrägfläche herabgleitenden Gegenstandes und im anderen Fall als Stoßer zum Anschieben eines auf dem Manipulator liegenden Gegenstandes, damit dieser in das hintere Regal überführt wird.

Vorzugsweise ist der Riemen hochkant angeordnet und er bildet eine Seitenbegrenzung. Gegenüberliegend befindet sich eine Seitenführung für den auf der Tragfläche liegenden Gegenstand, die zur Änderung der wirksamen Breite der Tragfläche verfahrbar ist. Dadurch wird eine definierte Aufnahmebreite für den Gegenstand geschaffen, wobei die Aufnahmebreite an die Breite des Gegenstandes angepasst ist. Der Gegenstand liegt also in einer exakt definierten Weise fest, so dass er zielgenau in den Kanal eines benachbarten Regals überführt werden kann.

Konstruktiv ist der Manipulator in der Weise ausgebildet, dass er einen zweiachsig bewegbaren Schlitten aufweist, der einen linear geführten Wagen trägt, auf welchem die Tragfläche angeordnet ist. Der Manipulator kann einen gesteuerten Schrägstellmechanismus zum seitlichen Schrägstellen der Tragfläche zur Anpassung an seitlich schräge Lagerplätze aufweisen. Seitlich schräge Lagerplätze sind dann zweckmäßig, wenn in einem Schrägfachbodenregal innerhalb eines Kanals nicht nur Gegenstände gleicher Abmessungen untergebracht werden, sondern gleichermaßen kleinere und größere Gegenstände. In Folge der Schrägstellung der Lagerplätze haben die Lagerplätze eine Anlagewand, gegen die die Gegenstände seitlich rutschen, so dass auch kleinere Gegenstände definiert an einem eigentlich zu großen Lagerplatz untergebracht werden. Der erfindungsgemäße Manipulator, der einen gesteuerten Schrägstellmechanismus aufweist, ist im Stande, sowohl seitlich gerade als auch seitlich schräge Lagerplätze zu bedienen. Dieser Aspekt hat unabhängig von der Gestaltung des Schiebemechanismus des Manipulators selbständige Bedeutung. Der Schrägstellmechanismus kann an dem Wagen angebracht sein und die Tragfläche relativ zu dem Wagen verstellen. Er kann von einem beispielsweise pneumatischen Verstellmechanismus bewegt werden.

Gemäß einem weiteren Aspekt der Erfindung ist vorgesehen, dass der Manipulator Messeinrichtungen zur Vermessung von Abmessungen eines Gegenstandes vor, bei oder nach Übernahme des Gegenstandes auf den Manipulator aufweist. Damit kann ein einzulagernder Gegenstand vermessen werden, um festzustellen, ob der Gegenstand von seinen Abmessungen her in den vorgesehenen Lagerplatz des betreffenden Regals hineinpasst. In EP 1 900 654 A1 (Willach) ist ein Warenannahmeautomat beschrieben, der eine Vermessungsstation zum Vermessen der einzulagernden Gegenstände aufweist. Diese Vermessungsstation befindet sich jedoch an dem Warenannahmeautomaten, der ortsfest angeordnet ist und die einzulagernden Gegenstände vereinzelt, identifiziert und in eine für die Einlagerung geeignete Ausrichtung bringt. Die vorliegende Erfindung verzichtet auf eine stationäre Vermessungsstation und bezieht den Manipulator in die Prozedur der Vermessung der Gegenstände ein. Dabei kann von den Manipulatorbewegungen Gebrauch gemacht werden. Bei einer bevorzugten Variante umfassen die Messeinrichtungen einen auf den Gegenstand ansprechenden ersten Sensor, der während eines Querlaufs des Manipulators die Breite eines Gegenstandes detektiert, während sich der Gegenstand in einem Regal oder einer anderen Haltevorrichtung befindet. Ferner kann ein Sensor vorgesehen sein, der die Höhe eines Gegenstandes detektiert.

Die Länge des Gegenstandes wird zweckmäßigerweise dadurch festgestellt, dass nahe der vorderen und/oder hinteren Übergabeseite der Tragfläche des Manipulators eine Lichtschranke vorgesehen ist, und dass beim Passieren der Lichtschranke durch die vom Schieber abgewandte Vorderseite eines Gegenstandes der Abstand des Schiebers von der Lichtschranke ermittelt und dadurch die Länge des Gegenstandes festgestellt wird.

Gemäß einer bevorzugten Ausgestaltung der Erfindung ist vorgesehen, dass der Manipulator einen Abstandssensor trägt, der die Tiefe eines Lagerplatzes bestimmt, wobei ein Rechner ermittelt, ob die Größe des Lagerplatzes für den auf der Tragfläche befindlichen Gegenstand ausreicht. Auf diese Weise findet eine Vermessung eines vorgesehenen Lagerplatzes durch den Manipulator statt, um festzustellen, ob der Lagerplatz für den einzulagernden Gegenstand ausreicht.

Im Folgenden wird unter Bezugnahme auf die Zeichnungen ein Ausführungsbeispiel der Erfindung näher erläutert.

Es zeigen:
- Figur 1: eine Draufsicht eines Lagerautomaten,
- Figur 2: eine perspektivische Ansicht eines Manipulators in dem Lagerautomaten,
- Figur 3: eine Frontansicht des Manipulators bei ungekippter Tragfläche,
- Figur 4: eine Frontansicht bei seitlich gekippter Tragfläche,
- Figur 5: eine Ansicht der Abgabeseite der Wareneingabevorrichtung entsprechend der Ansicht V-V von Figur 1,
- Figur 6: eine Ansicht der Eingabeseite des ersten Lagers entsprechend der Ansicht VI-VI von Figur 1 und
- Figuren 7-10: schematische Darstellungen des Einlagerungsvorgangs eines Gegenstandes.

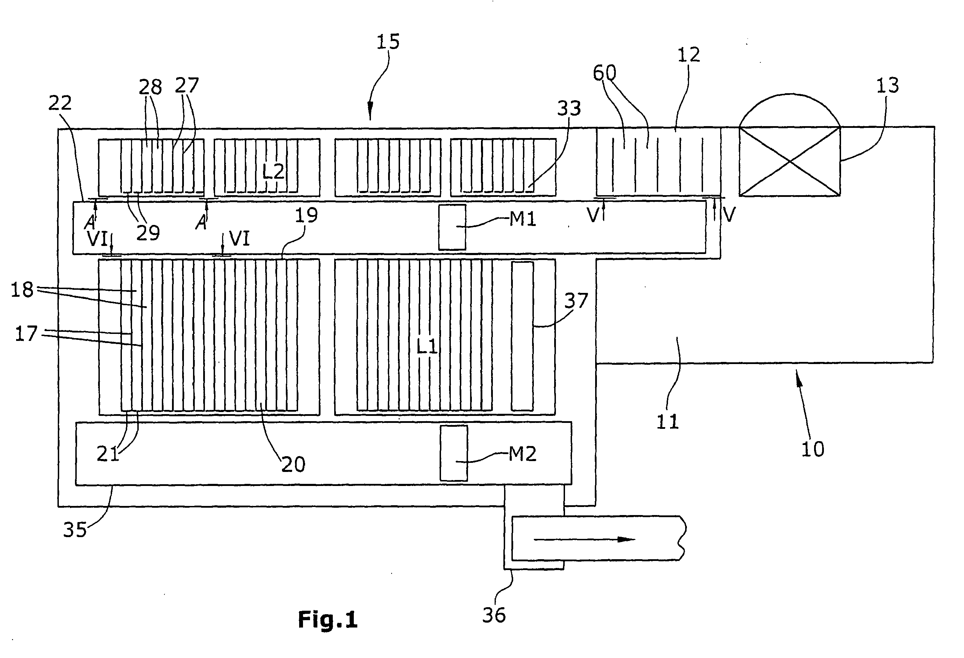

Gemäß Figur 1 ist eine Eingabestation 10 vorgesehen, die einen Warenannahmeautomaten 11 und eine Wareneingabevorrichtung 12 aufweist. Der Warenannahmeautomat und die Wareneingabevorrichtung entsprechen der Patentanmeldung EP 1 902 983 A2.. Der Warenannahmeautomat 11 enthält eine Eingabestelle zum ungeordneten Einwerfen von Waren, die anschließend vereinzelt, identifiziert und nacheinander einer Übergabestation zugeführt werden. Die Wareneingabevorrichtung dient zum manuellen Einlegen von Waren zum Zwecke des Einlagerns dieser Waren in die verschiedenen Lager.

In dem Lagerautomaten befindet sich ein erstes Kanallager L1, das aus einem Schrägfachbodenregal besteht. Dieses weist mehrere übereinander angeordnete Regalböden auf, deren Oberfläche durch Regalteiler 17 in Kanäle 18 unterteilt sind. Die Kanäle 18 haben Kanalböden und verlaufen von einem Eingabeende 19 zu einem Abgabeende 20 des Kanals 18. Durch die Schräge der Kanalböden rutschen Gegenstände, die in das Eingabeende 19 eingeführt werden, durch Schwerkraft bis zum Abgabeende 20. Am Abgabeende 20 befindet sich ein Anschlag 21, so dass der unterste Gegenstand in dem betreffenden Kanal angehalten wird, bis er von dem zugehörigen Manipulator entnommen wird. Die nachfolgenden Gegenstände rutschen dann nach. Die Kanäle 18 können unterschiedliche Breiten haben. Durch Versetzen der Regalteiler 17 kann die Kanalbreite an die jeweils zu speichernden Gegenstände angepasst werden. Der Lagerverwaltungsrechner sorgt dafür, dass in jedem Kanal gleiche Gegenstände eingeführt werden.

Nahe den Eingabeenden 19 der Kanäle 18 befindet sich der Verfahrweg 22 des ersten Manipulators M1. Der Verfahrweg 22 verläuft quer zur Richtung der Kanäle 18 entlang der gesamten Länge des ersten Lagers L1 und über diese hinaus bis in die Eingabestation 10 hinein. Der Manipulator M1 kann also bis in die Eingabestation 10 verfahren werden und dort Waren von der Wareneingabevorrichtung und/oder vom Warenannahmeautomaten entgegennehmen.

Der Manipulator M1 ist entlang des Verfahrweges 22 sowohl in der Länge als auch in der Höhe verfahrbar und kann somit vor das Eingabeende 19 eines jeden Kanals 18 gefahren werden, um einen Gegenstand von dem Manipulator M1 in den Kanal 18 einzuführen. An der Tragfläche 44 des Manipulators M1 ist ein gesteuerter Schieber 54 vorgesehen, der bewegt werden kann, um den Gegenstand auf der Tragfläche herauf oder herunter zu bewegen.

Der Manipulator M1 bedient die Eingabeseite des ersten Kanallagers L1. Auf der dem Kanallager L1 gegenüber liegenden Seite des Verfahrweges 22 ist ein zweites Kanallager L2 angeordnet, das ebenfalls ein mehretagiges Schrägfachbodenregal ist. Dieses weist zahlreiche durch Trennwände 27 begrenzte Kanäle 28 auf. Die Kanäle 28 sind generell breiter als die Kanäle 18 des ersten Lagers L1 und kürzer. Sie sind nicht für eine bestimmte Packungsgröße vorgesehen, sondern dienen zur Aufnahme unterschiedlicher Packungen. Die Kanalböden haben die gleiche Neigungsrichtung sowie auch den gleichen Neigungswinkel wie die Kanalböden der Kanäle 18. Das Kanallager L2 wird durch den selben Manipulator M1 bedient, der das Kanallager L1 bedient. Der Manipulator M1 befüllt das Kanallager L1 von oben her und er befüllt und entleert das Kanallager L2 von unten her. Der Manipulator schiebt einen auf seiner Tragfläche liegenden Gegenstand auf den Kanalboden des Kanallagers L2 hoch. Der Gegenstand wird dann von einem Anschlag 29 am unteren Ende des Kanalbodens abgestützt und zurückgehalten. Zum Entnehmen des Gegenstandes aus dem Kanallager L2 greift ein aus dem Manipulator M1 ausfahrbarer Finger durch einen Schlitz im Boden des betreffenden Kanals 28. Der Manipulator M1 wird in diesem Zustand hochgefahren, wobei der Gegenstand durch den Finger angehoben wird und über den Anschlag hinweg auf die Tragfläche 44 des Manipulators M1 gleitet. Das untere Ende des Kanals 28 bildet das Eingabe- und Abgabeende 33.

An das untere Abgabeende 20 der Kanäle des ersten Kanallagers L1 schließt sich der Verfahrweg 35 des zweiten Manipulators M2 an. Die Tragfläche des zweiten Manipulators M2 hat die selbe Schrägstellung wie die Kanalböden 16 des ersten Kanallagers L1. Sie dient zur Übernahme der die Kanäle 18 verlassenden Gegenstände. Nach Übernahme eines Gegenstandes wird der Manipulator M2 entlang des Verfahrweges 35 zu einer Ausgabestation 36 verfahren. Dort können die Gegenstände von einem Förderer oder einer anderen Einrichtung übernommen werden.

Zwischen den Verfahrwegen 22 und 35 erstreckt sich eine Übergabevorrichtung 37, die Gegenstände von dem Manipulator M1 übernehmen und zum Zwecke der Ausgabe auf den Manipulator M2 übertragen kann.

Zum Einlagern der Gegenstände werden die Gegenstände in die Wareneingabevorrichtung 12 oder den Warenannahmeautomaten 11 eingegeben. Die Gegenstände werden durch Lesen eines darauf angebrachten Barcodes identifiziert. Dann bestimmt der Rechner das Kanallager, in das die Einlagerung erfolgen soll, sowie auch den betreffenden Kanal. Bei der Abgabe von Gegenständen aus dem kombinierten Warenlager ermittelt der Rechner den Kanal, in dem der angeforderte Gegenstand gelagert ist, und bewirkt die Steuerung der Manipulatoren in der Weise, dass der Gegenstand entnommen und an der Ausgabestation 36 zur Verfügung gestellt wird.

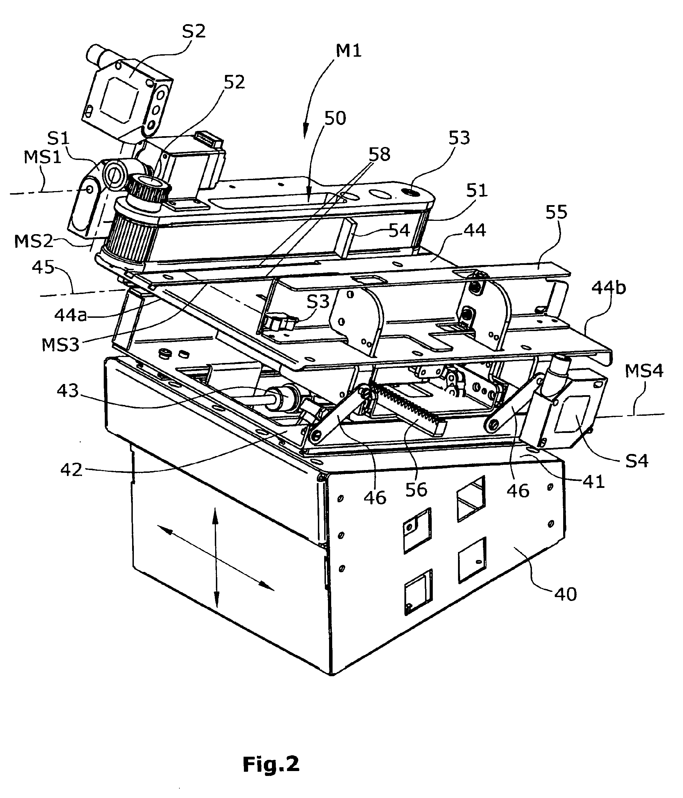

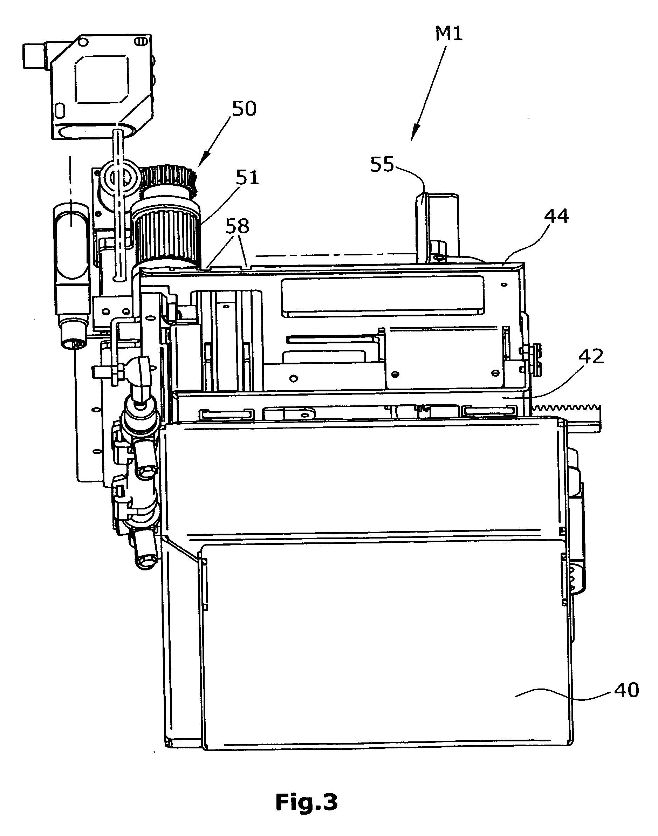

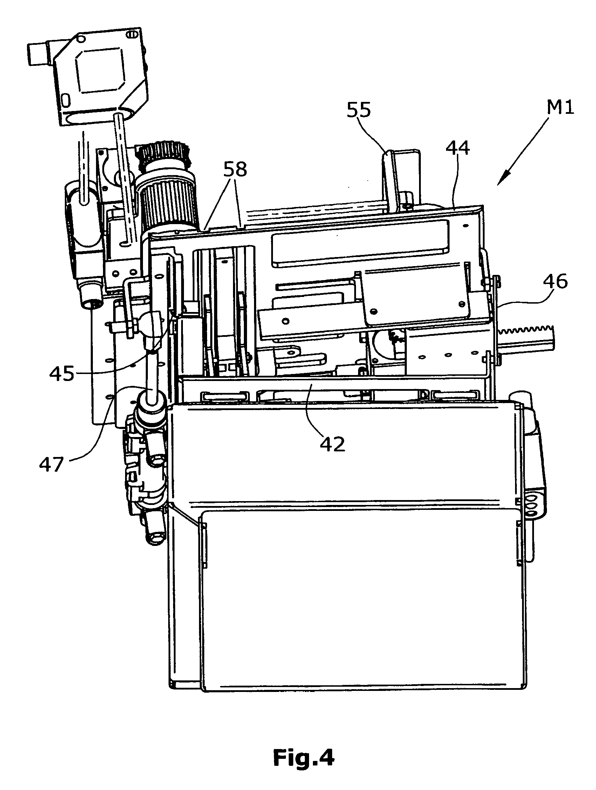

In den Figuren 2-4 ist der Aufbau des Manipulators M1 dargestellt. Der Manipulator weist einen zweiachsig bewegbaren Schlitten 40 auf, der von einem Lagerverwaltungsrechner gesteuert wird. Der Schlitten 40 hat eine schräge Oberseite 41, deren Schräge derjenigen der Kanalböden entspricht. Auf dieser Oberseite ist auf Schienen ein Wagen 42 quer zur Längsrichtung des Verfahrweges 22 in Richtung des Gefälles bewegbar. Der Antrieb des Wagens 42 geschieht durch einen Zylinder 43. Der Wagen 42 trägt die Tragfläche 44, bei der es sich hier um eine Platte handelt. Die Tragfläche 44 hat eine vordere Übergabeseite 44a und eine rückwärtige Übergabeseite 44b. Sie ist um eine Achse 45 einer linearen Führung herum schwenkbar, so dass die Tragfläche 44 seitlich schräg gestellt werden kann, wie dies in Figur 4 dargestellt ist. Die der Achse 45 gegenüberliegende Seite ist durch Lenker 46 mit dem Wagen 42 verbunden. Die Lenker bilden ein Parallelogrammgestänge zum seitlichen Kippen der Tragfläche 44. Die Kippbewegung resultiert aus der Linearbewegung eines Zylinders 47 auf der einen Seite und den sich dadurch aufrichtenden Lenkern 46 auf der anderen Seite des Wagens 42.

Auf der Tragfläche 44 ist ein Riemenförderer 50 angeordnet, der einen endlos umlaufenden Riemen 51 als Zahnriemen aufweist. Der Riemen 51 ist hochkant angeordnet und er läuft um Zahnriemenräder 52,53 herum. Der Riemen 51 hat einen seitlich abstehenden Schieber 54 zum Verschieben des Gegenstandes auf der Tragfläche 44. Der Riemen 51 kann in beiden Richtungen vollständig umlaufen, so dass der Schieber 54 sowohl gegen die Rückseite eines auf der Tragfläche 44 liegenden Gegenstandes ansetzbar ist als auch an der Vorderseite. Der Schieber 54 kann also einen Gegenstand über die vordere Übergabeseite 44a schieben oder auch über die rückwärtige Übergabeseite 44b. Folglich kann der Manipulator M1 sowohl das erste Kanallager L1 bedienen als auch das zweite Kanallager L2.

Dem Riemenförderer 50 gegenüber ist eine verstellbare Seitenführung 55 angeordnet, die von einer Antriebsvorrichtung 56 mit Zahnstange gesteuert bewegbar ist und sich selbsttätig auf die Breite des aufzunehmenden Gegenstandes einstellt.

In der Tragfläche 44 sind Finger 58 versenkt angeordnet. Diese Finger bestehen aus einer Gabel, die gesteuert bewegbar ist, um einen Gegenstand über die Tragfläche 44 hinaus anzuheben. Die Finger dienen zum Ausbaggern von Gegenständen durch Anheben eines auf dem Kanalboden des Regals liegenden Gegenstandes über den Anschlag hinaus, so dass die Blockierung am unteren Ende des Kanals dadurch aufgehoben wird. Außerdem dienen die Finger beim Einlagern zum Nachschieben eines von dem Riemenförderer 50 vorgeschobenen Gegenstandes, damit die Hinterkante dieses Gegenstandes den Anschlag 29 des Kanalbodens überwindet.

Der Manipulator M1 enthält Messeinrichtungen zur Vermessung von Abmessungen eines Gegenstandes vor, bei oder nach Übernahme des Gegenstandes auf den Manipulator. Diese Messeinrichtungen weisen einen ersten Sensor S1 auf, der an der Vorderseite des Manipulators angeordnet ist und ein Messstrahl MS 1 nach vorne richtet. Der Sensor S1 ist ein Licht-Reflexionssensor, der das Vorhandensein eines Gegenstandes in dem Regal vor dem Manipulator feststellt. Während einer Horizontalbewegung des Manipulators tastet der Messstrahl MS1 den vor ihm liegenden Gegenstand ab, um die Breite des Gegenstandes anhand des durchfahrenen Manipulatorweges zu bestimmen.

Ein am Manipulator vorgesehener zweiter Sensor S2, dessen Messstrahl MS2 nach unten gerichtet ist, dient der Höhenbestimmung eines Gegenstandes. Der Sensor S2 ist ein Abstandssensor. Während der Horizontalbewegung des Manipulators tastet er die Oberseite eines vor ihm liegenden Gegenstandes ab. Damit wird die Höhe des Gegenstandes relativ zu dem Fachboden bestimmt. Außerdem kann die Form des Gegenstandes erfasst werden. Ein dritter Sensor S3 wird von einer Lichtschranke gebildet, die einen Messstrahl MS3 erzeugt. Beim Übernehmen eines Gegenstandes auf den Manipulator stellt der Sensor S3 fest, wann die Vorderseite des Gegenstandes den Messstrahl MS3 freigibt. Diejenige Position, die der Schieber 54 in diesem Zustand einnimmt, repräsentiert die Länge des Gegenstandes, also den Abstand zwischen Messstrahl MS3 und Schieber 54.

Nach Feststellen der Breite des Gegenstandes wird der Antrieb 56 betätigt, um die Seitenführung 55 entsprechend der gemessenen Breite einzustellen.

Ein vierter Sensor S4 ist an der Rückseite des Manipulators vorgesehen. Dieser Sensor erzeugt einen Messstrahl MS4, der nach hinten gerichtet ist, also in Richtung auf das erste Lager L1, um die Tiefe des freien Raumes des betreffenden Lagerplatzes zu ermitteln. Dadurch wird festgestellt, ob die Tiefe des Lagerplatzes ausreicht, um den auf dem Manipulator liegenden Gegenstand aufzunehmen.

Der Sensor S1 kann ferner dazu benutzt werden, während eines Laufs des Manipulators die Positionen der Trennwände 27 des Kanallagers L2 festzustellen. Die Trennwände 27 können manuell versetzt werden. Durch einen Suchlauf des Manipulators wird festgestellt, ob Veränderungen der Trennwände 27 vorgenommen wurden. Die detektierten Positionen der Trennwände werden gespeichert. Auf diese Weise weiß der Rechner, welcher der Kanäle 28 auf welche Größe eingestellt ist. Die gleiche Funktion kann der Sensor S4 für das Kanallager L1 ausführen.

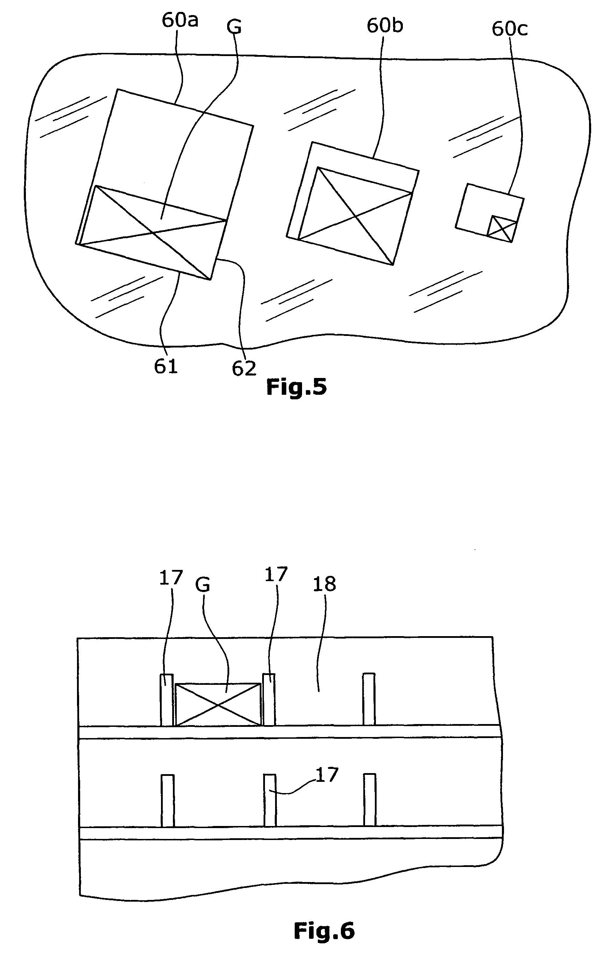

Das Lager L1 ist dafür vorgesehen, dass in jedem der Kanäle 18 Gegenstände gleicher Abmessungen bereitgehalten werden. Das Lager L2 ist hingegen so konzipiert, dass Gegenstände unterschiedlicher Abmessungen in den Kanälen 28 gelagert werden. Die Kanäle 18 des ersten Lagers L1 sind ohne seitliche Schrägstellung. Sie sind lediglich in Längsrichtung zum Abgabeende 20 hin geneigt. Dagegen sind die Kanäle 28 des zweiten Lagers L2 seitlich schräggestellt. Auch die Kanäle 60 der Wareneingabevorrichtung 12 sind seitlich schräg gestellt. Dies ist in Figur 5 dargestellt. Figur 5 zeigt die dem Verfahrweg 22 des Manipulators M1 zugewandten Abgabeöffnungen der Kanäle 60, durch die die Gegenstände zu dem Manipulator M1 übertragen werden. Da die Kanäle 60 nicht einer bestimmten Gegenstandsgröße zugeordnet sind, müssen sie Gegenstände unterschiedlicher Größen aufnehmen können. Dazu sind verschiedene Größen der Kanäle 60 vorgesehen, nämlich Größen 60a, 60b und 60c. Alle diese Kanäle sind seitlich schräg gestellt und sie haben einen schrägen Boden 61 und eine schräge Seitenwand 62. Diese Wände 61,62 dienen als Anlagewände für einen Gegenstand G, so dass dieser, auch wenn er nicht exakt in den Kanal passt, eine definierte Position im Kanal einnimmt. Der Schrägstellmechanismus des Manipulators M1 dient dazu, dass der Manipulator sowohl Kanäle mit seitlicher Schrägstellung als auch Kanäle ohne seitliche Schrägstellung bedienen kann (Figur 6). Sein Kippwinkel entspricht dem seitlichen Winkel der Kanalböden.

Die Kanäle 28 des zweiten Lagers L2 sind bei dem vorliegenden Ausführungsbeispiel für unterschiedliche Größen von Gegenständen vorgesehen. Daher handelt es sich ebenfalls um seitlich schräg gestellte Kanäle. Daher entspricht die Ansicht entlang der Linie A-A von Figur 1 im Wesentlichen Figur 5. Der Manipulator M1 kann mit gekippter, d.h. seitlich schräg gestellter Tragfläche 44 die Kanäle des Lagers L2 bedienen und mit seitlich ungekippter Tragfläche die Kanäle des Lagers L1.

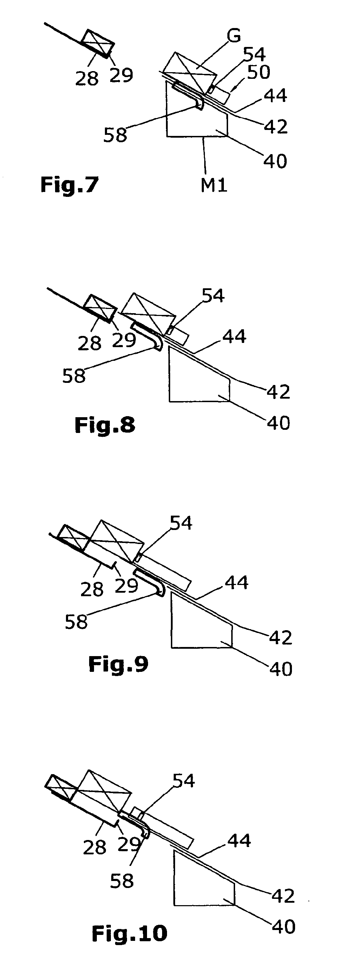

In den Figuren 7-10 ist der Vorgang des Einlagerns eines Gegenstandes G in das Lager L2 dargestellt. Der Manipulator M1 fährt vor den betreffenden Kanal 28 (Figur 7). Dann fährt die Tragfläche 44 von dem Wagen 42 aus nach vorne, wobei die Finger 58 mitgehen (Figur 8). Der Schieber 54 schiebt dann den Gegenstand G auf der Tragfläche vor (Figur 9), bis er die vorderen Enden der abgesenkten Finger 58 passiert hat. Dann werden die Finger 58 über die Tragfläche 44 angehoben, so dass ihre vorderen Enden an dem Gegenstand angreifen. Durch Vorschieben der Finger 58 wird der Gegenstand in den Kanal 28 über den Anschlag 29 hinweg überführt (Figur 10).

## Patentansprüche

1. Lagerautomat mit Lagerplätzen und einem gesteuert bewegbaren Manipulator (M1), der eine Tragfläche (44) aufweist zum Bedienen der Lagerplätze, wobei die Lagerplätze Schrägbodenfachregale sind, und dass die Tragfläche (44) des Manipulators (M1) eine Schrägfläche ist, so dass Gegenstände aus dem Regal auf die schräge Tragfläche des manipulators (M1) herabgleiten Können,
**dadurch gekennzeichnet, dass**
ein Schieber (54) zum Bewegen eines auf der Tragfläche (44) liegenden Gegenstandes (G) in entgegengesetzten Richtungen derart antreibbar ist, dass der Schieber (54) wahlweise an einem ersten Ende des Gegenstandes (G) oder an einem entgegengesetzten zweiten Ende angreifen kann.

2. Lagerautomat nach Anspruch 1, **dadurch gekennzeichnet, dass** der Schieber (54) an einem endlosen Riemen (51) angebracht ist, der einen vollständigen Umlauf vollziehen kann.

3. Lagerautomat nach Anspruch 1 oder 2, **dadurch gekennzeichnet, dass** in der Tragfläche (44) versenkt ein Finger (58) angeordnet ist, der über die Ebene der Tragfläche anhebbar und über einen Rand der Tragfläche hinaus ausfahrbar ist.

4. Lagerautomat nach einem der Ansprüche 1-3, **dadurch gekennzeichnet, dass** der Riemen (51) hochkant angeordnet ist und eine Seitenbegrenzung bildet, und dass eine Seitenführung (55) für den auf der Tragfläche (44) liegenden Gegenstand vorgesehen ist, die zur Änderung der wirksamen Breite der Tragfläche (44) verfahrbar ist.

5. Lagerautomat nach Anspruch 1, **dadurch gekennzeichnet, dass** der Manipulator einen gesteuert bewegbaren Schlitten (40) aufweist, der einen linear geführten Wagen (42) trägt, auf welchem die Tragfläche (44) angeordnet ist.

6. Lagerautomat nach einem der Ansprüche 1-5, **dadurch gekennzeichnet, dass** die Tragfläche (44) eine vordere Übergabeseite (44a) und am entgegengesetzten Ende eine hintere Übergabeseite (44b) aufweist.

7. Lagerautomat nach Anspruch 5 oder 6, **dadurch gekennzeichnet, dass** ein gesteuerter Schrägstellmechanismus zum seitlichen Schrägstellen der Tragfläche (44) zur Anpassung an seitlich schräge Lagerplätze vorgesehen ist.

8. Lagerautomat nach Anspruch 7, **dadurch gekennzeichnet, dass** der Schrägstellmechanismus an dem Wagen (42) angebracht ist und die Tragfläche (44) relativ zu dem Wagen verstellt.

9. Lagerautomat nach Anspruch 1, **dadurch gekennzeichnet, dass** der Manipulator (M1) Messeinrichtungen zur Vermessung von Abmessungen eines Gegenstandes (G) vor, bei oder nach Übernahme des Gegenstandes auf die Tragfläche (44) aufweist.

10. Lagerautomat nach Anspruch 9, **dadurch gekennzeichnet, dass** die Messeinrichtungen einen auf den Gegenstand ansprechenden ersten Sensor (S1) umfassen, der die Breite eines Gegenstandes detektiert.

11. Lagerautomat nach Anspruch 9, **dadurch gekennzeichnet, dass** die Messeinrichtungen einen auf den Gegenstand ansprechenden zweiten Sensor (S2) umfassen, der die Höhe eines Gegenstandes detektiert.

12. Lagerautomat nach Anspruch 9, **dadurch gekennzeichnet, dass** die Messeinrichtungen einen nahe der vorderen und/oder hinteren Übergabeseite (44a,44b) der Tragfläche (44) vorgesehenen Sensor (S3) umfassen, und dass eine Einrichtung vorgesehen ist, die beim Passieren des Sensors (S3) durch die Vorderseite eines Gegenstandes den Abstand eines an der Rückseite des Gegenstandes angreifenden Schiebers von dem Sensor (S3) ermittelt und dadurch die Länge des Gegenstandes feststellt.

13. Lagerautomat nach Anspruch 1, **dadurch gekennzeichnet, dass** der Manipulator (M1) einen Abstandssensor (S1, S4) trägt, der die Tiefe eines Lagerplatzes bestimmt, wobei ein Rechner ermittelt, ob die Größe des Lagerplatzes für den auf der Tragfläche (44) befindlichen Gegenstand (G) ausreicht.

## Claims

1. A storage automat comprising storage places and a controllably moveable manipulator (M1) comprising a load-bearing surface (44) for servicing the storage places, the storage places being shelves of the type with inclined bins and the load-bearing surface (44) of the manipulator (M1) being an oblique surface so that objects from the shelve can slide down onto the inclined load-bearing surface of the manipulator (M1),
**characterized in that**
a slider (54), provided for moving an object (G) resting on the load-bearing surface (44), is drivable in opposite directions in a manner allowing the slider (54) to selectively engage a first end of said object (G) or a second end of said object (G) opposite to said first end.

2. The storage automat according to claim 1, **characterized in that** said slider (54) is mounted to an endless belt (51) adapted to run in a full circle.

3. The storage automat according to claim 1 or 2, **characterized in that** a finger (58) is arranged recessed in the load-bearing surface (44), said finger being adapted to be lifted above the plane of the load-bearing surface and to be extended beyond an edge of the load-bearing surface.

4. The storage automat according to any one of claims 1-3, **characterized in that** said belt (51) is arranged in an upright configuration and forms a lateral delimitation, and that a lateral guidance means (55) is provided for the object resting on the load-bearing surface (44), said lateral guidance means being displaceable for changing the effective width of the load-bearing surface (44).

5. The storage automat according to claim 1, **characterized in that** the manipulator comprises a controllably moveable carriage (40) supporting a displaceable carrier (42), said carrier being guided for linear movement and carrying the load-bearing surface (44) thereon.

6. The storage automat according to any one of claims 1-5, **characterized in that** the load-bearing surface (44) has a front transfer side (44a) and, on the opposite end, a rear transfer side (44b).

7. The storage automat according to claim 5 or 6, **characterized in that** a controlled inclining mechanism is provided to effect a lateral inclination of the load-bearing surface (44) for adaptation to laterally inclined storage places.

8. The storage automat according to claim 7, **characterized in that** said inclining mechanism is mounted to the displaceable carrier (42) and is operative to adjust the load-bearing surface (44) relative to the carrier.

9. The storage automat according to claim 1, **characterized in that** the manipulator (M1) comprises measurement devices for measuring the dimensions of an object (G) before, during or after takeover of the object by the load-bearing surface (44).

10. The storage automat according to claim 9, **characterized in that** said measurement devices comprise a first sensor (S1) which is responsive to the object and is operative to detect the width of an object.

11. The storage automat according to claim 9, **characterized in that** said measurement devices comprise a second sensor (S2) which is responsive to the object and is operative to determine the height of an object.

12. The storage automat according to claim 9, **characterized in that** said measurement devices comprise a sensor (S3) provided near the front and/or rear transfer side (44a,44b) of the load-bearing surface (44), and that an apparatus is provided which, when said sensor (S3) passes through the front side of an object, is operative to detect the distance by which a slider engaging the rear side of the object is spaced from said sensor (S3) and to determine the length of the object thereby.

13. The storage automat according to claim 1, **characterized in that** the manipulator (M1) comprises a distance sensor (S1,S4) for determining the depth of a storage place, with a computer detecting whether the size of the storage place is sufficient for the object (G) on the load-bearing surface (44).

## Revendications

1. Automate de stockage comportant des emplacements de stockage et un manipulateur (M1) qui est déplaçable de façon commandée et qui présente une surface de support (44) destinée à desservir les emplacements de stockage, les emplacements de stockage étant des casiers de rangement inclinés et la surface de support (44) du manipulateur (M1) étant une surface inclinée, de sorte que des objets peuvent glisser vers le bas du casier sur la surface de support inclinée du manipulateur (M1), **caractérisé en ce qu'**un curseur (54) destiné à déplacer un objet (G) se trouvant sur la surface porteuse (44) peut être entraîné dans des directions opposées de sorte que le curseur (54) peut porter au choix contre une première extrémité de l'objet (G) ou contre une deuxième extrémité opposée.

2. Automate de stockage selon la revendication 1, **caractérisé en ce que** le curseur (54) est monté sur une courroie sans fin (51) qui peut faire un tour complet.

3. Automate de stockage selon la revendication 1 ou 2, **caractérisé en ce que** à fleur de la surface de support (44) est disposé un doigt (58) qui peut être soulevé au-dessus du plan de la surface de support et qui peut être déployé au-delà d'un bord de la surface de support.

4. Automate de stockage selon l'une des revendications 1 à 3, **caractérisé en ce que** la courroie (51) est disposée de chant et forme une limitation latérale, et **en ce qu'**un guidage latéral (55) est prévu pour l'objet se trouvant sur la surface de support (44), lequel guidage latéral peut être déplacé pour modifier la largeur active de la surface de support (44).

5. Automate de stockage selon la revendication 1, **caractérisé en ce que** le manipulateur comporte un coulisseau (40) qui est déplaçable de façon commandée et qui supporte un chariot (42) qui est guidé linéairement et sur lequel est disposée la surface de support (44).

6. Automate de stockage selon l'une des revendications 1 à 5, **caractérisé en ce que** la surface de support (44) présente un côté de transfert avant (44a) et à l'extrémité opposée un côté de transfert arrière (44b).

7. Automate de stockage selon la revendication 5 ou 6, **caractérisé en ce qu'**il est prévu un mécanisme d'inclinaison commandé destiné à incliner latéralement la surface de support (44) pour effectuer une adaptation à des emplacements de stockage inclinés latéralement.

8. Automate de stockage selon la revendication 7, **caractérisé en ce que** le mécanisme d'inclinaison est monté sur le chariot (42) et déplace la surface de support (44) par rapport au chariot.

9. Automate de stockage selon la revendication 1, **caractérisé en ce que** le manipulateur (M1) comporte des dispositifs de mesure pour mesurer des dimensions d'un objet (G) avant, pendant ou après le transfert de l'objet sur la surface de support (44).

10. Automate de stockage selon la revendication 9, **caractérisé en ce que** les dispositifs de mesure comportent un premier capteur (S1) qui est sensible à l'objet et qui détecte la largeur d'un objet.

11. Automate de stockage selon la revendication 9, **caractérisé en ce que** les dispositifs de mesure comportent un deuxième capteur (S2) qui est sensible à l'objet et qui détecte la hauteur d'un objet.

12. Automate de stockage selon la revendication 9, **caractérisé en ce que** les dispositifs de mesure comportent un capteur (S3) qui est prévu près du côté de transfert avant et/ou arrière (44a, 44b) de la surface de support (44), et **en ce qu'**il est prévu un dispositif qui détermine, lors du passage du capteur (S3) par le côté avant d'un objet, la distance d'un curseur, portant contre le côté arrière de l'objet, par rapport au capteur (S3) et détecte ainsi la longueur de l'objet.

13. Automate de stockage selon la revendication 1, **caractérisé en ce que** le manipulateur (M1) supporte un capteur de distance (S1, S4) qui détermine la profondeur d'un emplacement de stockage, un calculateur déterminant si la dimension de l'emplacement de stockage est suffisante pour l'objet (G) se trouvant sur la surface de support (44).
